# EUROPÄISCHE PATENTSCHRIFT

(11) **EP 2 142 969 B1**
(45) Veröffentlichungstag und Bekanntmachung des Hinweises auf die Patenterteilung: **27.03.2013**
(21) Anmeldenummer: 08735853.7
(22) Anmeldetag: 04.04.2008
(51) Int. Cl.: G05B 19/418

(54) **EINDEUTIGE IDENTIFIZIERUNG VON AUTOMATISIERUNGS-KOMPONENTEN**
EXPLICIT IDENTIFICATION OF AUTOMATION COMPONENTS
IDENTIFICATION UNIVOQUE DE COMPOSANTS D'AUTOMATISATION

(30) Priorität: 30.04.2007 DE 102007020273
(43) Veröffentlichungstag der Anmeldung: 13.01.2010
(73) Patentinhaber: Siemens Aktiengesellschaft, 80333 München (DE)
(72) Erfinder: HOCK, Christian, 90763 Fürth (DE); DEIRETSBACHER, Karl-Heinz, 91090 Effeltrich (DE)
(86) Internationale Anmeldenummer: PCT/EP2008/054115
(87) Internationale Veröffentlichungsnummer: WO 2008/132019

(56) Entgegenhaltungen:
- EP-A- 1 672 313
- WO-A-2005/106606
- WO-A-2007/028956
- US-A1- 2005 110 636

## Beschreibung

Die Erfindung betrifft ein Verfahren zur eindeutigen Identifikation von zumindest einer Komponente eines Automatisierungssystems.

Ein derartiges Verfahren kommt auf dem Gebiet der Automatisierungstechnik zum Einsatz. In Automatisierungsanlagen ist die eindeutige Identifizierung einzelner Komponenten eine fundamentale und schwierige Aufgabe. Sicherheitsanforderungen und Mengengerüste erfordern hierbei oft logische Hierarchien, wodurch die Adressierung und/oder Lokalisierung dieser Komponenten von beliebigen Punkten der Anlage ein Problem darstellt. Dieses Problem verstärkt sich mit zunehmender Komplexität der Anlage exponentiell.

Sensoren und Aktoren - als kleinste Automatisierungskomponenten - können immer mehr Informationen, insbesondere über sich selbst, speichern und verarbeiten sowie auch untereinander kommunizieren. Diese Komponenten können - unabhängig davon, dass diese miteinander kommunizieren - bereits eine gewisse vorverarbeitende Leistung ihrer gesammelten Information(en) bewerkstelligen.

Diese neue Sichtweise, dass Sensoren/Aktoren Netzwerke bilden können, bekommt insbesondere in der Automatisierungstechnik immer mehr Bedeutung. Hierbei ist es unerheblich, ob es sich bei den Komponenten um verdrahtet (wired) oder unverdrahtet (wireless) kommunizierende, fremd energieversorgte oder autark energieversorgte Sensoren/Aktoren handelt.

Sensoren/Aktoren können ihre Daten sowohl über eine Punkt-zu-Punkt-Verbindung an einen Konzentrator, als auch über eine vermaschte Netzwerkinfrastruktur an einen nicht vorher direkt spezifizierten Knoten (ein z.B. einzelner Sensor/Aktor) weitergeben. Explizit sei hierbei daraufhingewiesen, dass es sich bei dem genannten Knoten nicht um den Zielknoten handelt. Bei einer drahtlosen (wireless) Punkt-zu-Punkt-Verbindung zu einem Konzentrator kann festgelegt werden, über welchen Konzentrator ein einzelner Sensor/Aktor mit der Infrastruktur kommuniziert. Diese Zuordnung ist allerdings optional. Wenn keine solche Zuordnung vorgenommen wird, dann geschieht sie zufällig. Die zufällige Zuordnung ist bei vermaschten (nicht-hierarchischen) Netzen eher der Normalfall. Bei verdrahteten (wired) Sensoren/Aktoren wird die Zuordnung zu einem Konzentrator von der Verdrahtung bestimmt.

Bisher erfolgt die Zuordnung von Identifikationen typischerweise in kleineren Einheiten einer Automatisierungsanlage. Das heißt die Eindeutigkeit ist nur innerhalb dieser Einheit gewährleistet. Für die anlagenweite Eindeutigkeit wird häufig der lokale Identifikator um die Identifikation der Teilanlage ergänzt. Bei einer Unterteilung in mehrere Hierarchien erhöht sich die Komplexität. Durch das eben beschriebene Vorgehen beinhaltet die Identifikation auch eine Strukturinformation. Daher unterscheiden sich die Identifikatoren je nachdem, von wo aus die Komponenten adressiert werden. Das Problem der Lokalisierung wird damit nicht gelöst.

Konkretes Beispiel: In der Automatisierungswelt erfolgt die Zuordnung der wireless Sensoren/Aktoren zu einem Konzentrator durch eine - optionale - oftmals manuell zu erstellende Projektierungsinformation. Auf dieser Grundlage werden die Sensoren/Aktoren in die Infrastruktur integriert, so dass sie an der Kommunikation teilnehmen können. Bei wired Sensoren/Aktoren erfolgt diese Zuordnung zu einem Konzentrator - wie schon erwähnt - über die Verdrahtung. Ähnlich wie im wireless Fall kann die Zuordnung in vermaschten Netzen entweder vorgegeben werden (z.B. über eine Projektierungsinformation), oder sich zufällig ergeben.

Je vielfältiger die Kombinationen der verschiedenen Techniken sind, desto aufwändiger und fehleranfälliger werden sowohl die Erstellung/Wartung/Pflege einer z.B. Projektierung als auch die spätere logische Zuordnung der eigentlichen Funktion/Funktionalität zu ihrer eigentlichen logischen Gruppe (übergeordneten logischen Funktion/Funktionalität). Dies alles gilt auch beim Einsatz nur einer Technik/Technologie (z.B. bei entsprechender Menge an Sensoren/Aktoren).

Heutige Verfahren, eine gewisse logische Grundordnung per Definition herzustellen, nutzen häufig die vorhandene Kommunikationsinfrastruktur als ersten logischen Ordnungsparameter. Dies ist jedoch spätestens bei der Verwendung mehrerer unterschiedlicher Kommunikationsmechanismen (z.B. Wired, Wireless) sehr schwierig. Alle vorgenannten Verfahren haben den Nachteil, dass neben der - meist visuellen - Überprüfung der Anordnung der Automatisierungskomponenten auch keine eineindeutige Zuordnung dieser erfolgen kann. Ebenso können Einbauort, Einbaulage und die räumliche Ausdehnung nicht automatisiert überprüft werden.

Aus der WO 2007/028956 A1 ist bereits ein System zum Nachverfolgen von Komponenten (Bestandteile der Produktionsanlage oder Zwischenprodukte der Produktion) in einem Automatisierungssystem bekannt. In der Anlage verteilt werden RF Transmitter installiert, welche mit RF Transpondern in den Komponenten kommunizieren können. Die Ermittlung des Ortes der nachverfolgten Komponente geschieht durch Ermittlung des Ortes des in der Kommunikation verwendeten RF Transmitters.

Der Erfindung liegt die Aufgabe zugrunde, ein Verfahren zur eindeutigen Identifikation von Automatisierungskomponenten vorzuschlagen, das die Nachteile der bekannten Lösungen vermeidet.

Diese Aufgabe wird durch ein Verfahren zur weltweit eindeutigen Identifikation von zumindest einer Komponente eines Automatisierungssystems gelöst, wobei der Komponente mittels mehrdimensionaler Koordinaten eineindeutig eine Ortsinformation zugeordnet wird, die einen Punkt innerhalb der Komponente bezeichnet und die an das Automatisierungssystem übertragen und/oder für das Automatisierungssystem bereitgestellt wird.

Die Aufgabe wird ferner gelöst durch eine Komponente eines Automatisierungssystems beziehungsweise ein Automatisierungssystem mit den in Anspruch 16 beziehungsweise 17 angegebenen Merkmalen.

Durch die Verwendung von mehrdimensionalen Koordinaten wird für die Automatisierungskomponenten (als kleinste werden hier die Sensoren/Aktoren genannt) eine weltweit eineindeutige Identifikation (eine GUID) und/oder eine genaue Ortsbestimmung erreicht. Mit GUID ist hier nicht eine GUID der Form wie im RFC 4122 beschrieben gemeint, sondern allgemein nur die Tatsache einer global eindeutigen ID.

Das erfindungsgemäße Verfahren ist unabhängig vom verwendeten Kommunikationsweg und/oder -medium, solange die Informationen transportiert werden können. Alle benötigten Informationen werden von den Sensoren/Aktoren selbst geliefert (was nicht bedeutet, dass sie auch von den Sensoren/Aktoren erzeugt werden).

Es ist unbedeutend, wo eine Komponente - für sich - den mehrdimensionalen Koordinatenpunkt festlegt, solange sich dieser innerhalb ihrer physikalischen Hülle befindet. Hiermit wird bereits eine weltweit eineindeutige Information generiert. Dabei ist es für die Verwendung vorteilhaft, wenn alle Komponenten einen wohldefinierten Ausgangspunkt haben.

Durch das erfindungsgemäße Verfahren ergeben sich zahlreiche Vorteile:
- Die Projektierung wird sicherer und einfacher. Die Position im Koordinatensystem kann z.B. mithilfe von handelsüblichen Geräten ermittelt werden.
- Das Routing von Anfragen kann auf Basis der Koordinaten erfolgen.
- Eine eineindeutige Identifizierung und somit ein zweifelsfreier Zugriff auf Automatisierungskomponenten (z.B. Sensoren/Aktoren) kann - auch automatisiert - auf Basis dieser Information erfolgen.
- Eine logische Gruppierung/Zuordnung ist unabhängig von vorhandenen Infrastrukturen realisierbar.
- In OPC-Servern kann die Koordinaten-Identifikation direkt entweder als String für ItemID (klassisches OPC) oder als NodeID (Unified Architecture) genutzt werden. Bei OPC UA kann außerdem bereits durch den Namespace spezifiziert werden, dass er sich bei der ID um eine Koordinaten-GUID handelt.
- Die Koordinaten-Identifikation erlaubt den Einsatz leistungsfähiger Mapping- und Navigationstools.

In einer vorteilhaften Form der Ausgestaltung wird die Ortsinformation von der Komponente ermittelt. Jede Komponente ermittelt z.B. beim Einschalten ihre Koordinaten (beispielsweise über GPS).

In einer weiteren vorteilhaften Ausführungsform wird die Ortsinformation in einem nicht-flüchtigen Speicher abgelegt. Dabei ist es unbedeutend, wo und wie eine Komponente die Informationen ablegt, insbesondere muss dies nicht zwingend innerhalb der physikalischen Hülle der Komponente sein.

In einer weiteren vorteilhaften Ausführungsform überwacht die Komponente ihre Ortsinformation und meldet eine Abweichung von einem Istwert an das Automatisierungssystem. Hierdurch kann die Komponente z.B. beim Einschalten (und damit dem Ermitteln der Koordinaten) eine Ortsveränderung feststellen und diese gegebenenfalls melden. Natürlich wird durch die Überwachung auch im laufenden Betrieb bei Komponenten, die nicht als (geplant) ortsveränderlich gekennzeichnet sind, die aber trotzdem (z.B. durch Manipulation) ihren Ort ändern, eine Meldung an das Automatisierungssystem gegeben und beispielsweise von diesem oder von der Komponente selbst ein Alarm generiert.

In einer weiteren vorteilhaften Ausführungsform geht die Komponente bei Vorliegen einer Abweichung ihrer Ortsinformation von einem Istwert in einen Sicherheitszustand über oder wird vom Automatisierungssystem in einen solchen versetzt. Die Komponente geht also, vorteilhafterweise nach dem Absetzen eines Alarmsignals, in einen besonderen Zustand über, in dem sie den restlichen Betrieb auf keinen Fall stört.

In einer weiteren vorteilhaften Ausführungsform wird die Ortsinformation um eine erste Zeitinformation ergänzt, die angibt, wann sich die Komponente an dem zugehörigen Ort gefunden hat. Für den Fall, dass Komponenten sich temporär zu dem System hinzufügen (z.B. Wartungstechniker mit PDA betritt die Anlage) oder bei (geplant) ortsveränderlichen Komponenten wird somit durch die Orts-/Zeitinformation beschrieben, wann und wo die Komponente für das System sichtbar wurde. Hat die Komponente bereits eine GUID, wird diese verwendet. Dies bedeutet nicht, dass die GUID permanent geändert wird. Aus dem Verfahren ergibt sich, dass alle Komponenten zu jedem Zeitpunkt über jeweils eine eindeutige GUID verfügen.

In einer weiteren vorteilhaften Ausführungsform stellt die Komponente eine Rauminformation über ihre räumliche Ausrichtung und/oder Ausdehnung bereit. Somit kann die Komponente auch noch eine Information zu ihrer Einbaulage bereitstellen. Die Einbaulage ist eine Information, welche die räumliche Ausrichtung einer Komponente widerspiegelt. Hierdurch kann die Überprüfung auf Einbauposition und Einbaulage direkt bis zum physikalischen Sensor/Aktor durchgeführt werden.

In einer weiteren vorteilhaften Ausführungsform wird die Rauminformation in einem nicht-flüchtigen Speicher abgelegt. Dieser Speicher kann natürlich mit dem, in dem die Ortsinformation abgelegt ist, identisch sein, muss sich jedenfalls wie dieser nicht zwingend innerhalb der physikalischen Hülle der Komponente befinden.

In einer weiteren vorteilhaften Ausführungsform überwacht die Komponente ihre Rauminformation und meldet eine Abweichung von einem Istwert an das Automatisierungssystem. Hierdurch wird - analog zur Überwachung der Ortsinformation - z.B. bereits beim Einschalten der Komponente überprüft, ob sie sich noch in der richtigen Einbaulage befindet. Der Istwert kann dabei - wie analog natürlich auch der Istwert für die Ortsinformation - von einem Anwender/Benutzer/Projekteur vorgegeben werden. Auch in diesem Ausführungsbeispiel wird die Rauminformation der Komponente - wiederum analog zu Ortsinformation - ebenso im laufenden Betrieb überwacht und gegebenenfalls ein Alarmsignal generiert.

In einer weiteren vorteilhaften Ausführungsform geht die Komponente bei Vorliegen einer Abweichung ihrer Rauminformation von einem Istwert in einen Sicherheitszustand über oder wird vom Automatisierungssystem in einen solchen versetzt. Somit wird auch in diesem Fall dafür Sorge getragen, dass beispielsweise bei Manipulation oder einer Fehlfunktion, die die räumliche Ausrichtung und/oder Ausdehnung ungewollt ändert, die Komponente in einen besonderen Zustand übergeht, in dem sie den restlichen Betrieb auf keinen Fall stört.

In einer weiteren vorteilhaften Ausführungsform wird die Rauminformation um eine zweite Zeitinformation ergänzt, die angibt, wann die Komponente die zugehörige Ausrichtung und/oder Ausdehnung aufgewiesen hat. Somit können Änderungen der Rauminformation bei sich bewegenden Komponenten und/oder solche, bei denen sich die räumliche Ausdehnung ändert, zeitlich verfolgt werden. Ein gegebenenfalls von einem Anwender/Benutzer/Projekteur vorgegebener Istwert zur Überwachung der Rauminformation auf eine Abweichung kann dabei - wie analog natürlich auch der Istwert für die Ortsinformation - zeitlich variabel sein.

In einer weiteren vorteilhaften Ausführungsform wird ein Grundwert für die Orts- und/oder Rauminformation in einem nicht-flüchtigen Speicher abgelegt. Hierdurch wird also eine Voreinstellung für die Orts- und/oder Rauminformation von der Komponente gespeichert beziehungsweise abgerufen.

In einer weiteren vorteilhaften Ausführungsform werden mehrere Komponenten des Automatisierungssystems zu einer Komponente gruppiert. Das heißt Komponenten können aus Komponenten zusammengesetzt sein. Insbesondere können so redundante und/oder hoch verfügbare Komponenten als eine (zusammengefasste) Komponente aufgefasst werden. Bei redundanten und/oder hoch verfügbaren Komponenten, die aufgelöst - jede für sich - aufgefasst werden, sollte vorteilhafterweise zusätzlich eine Information über die Zusammengehörigkeit bereitgestellt werden.

In einer weiteren vorteilhaften Ausführungsform definieren alle Komponenten des Automatisierungssystems ihre Ortsinformation mittels Koordinaten desselben Koordinatensystems. Das erfindungsgemäße Verfahren setzt nicht die Verwendung eines bestimmten Koordinatensystems voraus, jedoch erleichtert die Verwendung nur eines Koordinatensystems die Verwendung der Komponenten, da keine Erkennung beziehungsweise Umrechnung und letztendlich eventuell normierte Abspeicherung der Koordinaten erfolgen muss.

In einer weiteren vorteilhaften Ausführungsform wird bei einer Kommunikation mit der Komponente zur Adressierung die eineindeutige Ortsinformation verwendet. Das heißt die Kommunikationsschichten können die Eindeutigkeit nutzen, um ihrerseits optimierter/optimaler arbeiten zu können (z.B. durch den Ersatz von MAC-Adressen durch die GUID).

Im Folgenden wird die Erfindung anhand der in den Figuren dargestellten Ausführungsbeispiele näher beschrieben und erläutert. Es zeigen:

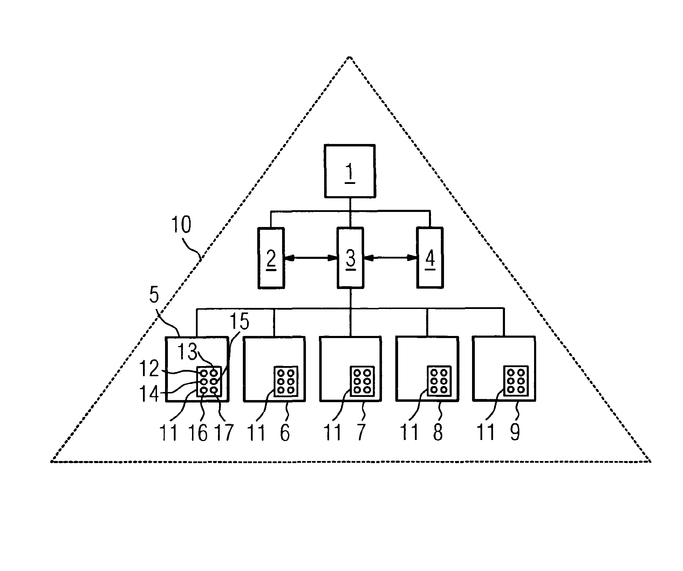

- FIG 1: eine schematische Darstellung eines Automatisierungssystems mit verschiedenen Komponenten.

Fig 1 zeigt ein Automatisierungssystem 10 mit verschiedenen Komponenten 1-9 in Form einer "Automatisierungspyramide", die unterschiedliche Hierarchie-Ebenen darstellt. Dabei kann die oberste Komponente 1 beispielsweise ein PC oder eine Workstation sein, die Komponenten 2-4 in der mittleren Ebene stellen z.B. eine SPS oder einen Industrie-PC dar, und die Komponenten 5-9 symbolisieren Sensoren oder Aktoren. Das erfindungsgemäße Verfahren ist dabei unabhängig von den jeweiligen Kommunikationswegen zwischen den verschiedenen Komponenten 1-9; eine gängige Realisierung für die Verbindung zwischen PC 1 und SPS 2-4 ist z.B. Industrial Ethernet (über das die SPS 2-4 auch untereinander kommunizieren können), für die Verbindung von den SPS 2-4 zu den Sensoren und Aktoren 5-9 z.B. ein AS-Interface. Bei den Sensoren und Aktoren 5-9 ist ferner ein nicht-flüchtiger Speicher 11 dargestellt, in dem verschiedene Daten 12-17 abgelegt werden können. (Speicher 11 und/oder weitere Mittel zur Durchführung des erfindungsgemäßen Verfahrens können natürlich auch die Komponenten 1-4 aufweisen, sind aber in der Figur nicht dargestellt, sondern werden nur beispielhaft anhand der Sensoren und Aktoren 5-9 diskutiert.)

Es sei angenommen, dass er sich zumindest bei der Komponente 5 um eine (geplant) ortsveränderliche Komponente handelt, so dass die Ortsinformation 12 um eine erste Zeitinformation 13 ergänzt wird. Die Orts-/Zeitinformation 12, 13 beschreibt, wann und wo die Komponente 5 für das System 10 sichtbar ist beziehungsweise wurde. Vorteilhafterweise weist die Komponente 5 auch Mittel auf, mit denen sie die Ortsinformation 12 auch selbst bestimmen kann, beispielsweise über GPS. Ferner stelle die Komponente 5 eine Rauminformation 14 bereit, die ebenfalls veränderlich ist und daher mit einer zweiten Zeitinformation 15 versehen wird. Für die Orts- und Rauminformation 12, 14 ist ein (vorteilhafterweise zeitabhängiger) Istwert 16 im Speicher 11 abgelegt, anhand dessen die Komponente 5 überwachen kann, ob eine ungewollte Abweichung von diesem Istwert 16 vorliegt, die beispielsweise auf Manipulation oder eine Fehlfunktion hindeutet. Schließlich ist ein Grundwert 17 für die Orts- und Rauminformation 12, 14 gespeichert, der - insbesondere für die Rauminformation 14 - eine Grundstellung angibt.

Das hier am Beispiel der Komponente 5 Dargestellte gilt analog natürlich auch für die übrigen Komponenten 1-4, 6-9. Auf diese Weise wird die Projektierung des Automatisierungssystems 10 deutlich einfacher, da die Komponenten 1-9 ihre GUID selber bereitstellen, und insbesondere dann auch deutlich sicherer, wenn sie beispielsweise über GPS die für die Ortsinformation 12 benötigten mehrdimensionalen Koordinaten auch selber bestimmen. Im Automatisierungssystem 10 kann das Routing von Anfragen auch auf Basis der Koordinaten erfolgen. Zudem können die Kommunikationsschichten die eineindeutige Ortsinformation 12 nutzen, um ihrerseits beispielsweise durch den Ersatz von MAC-Adressen durch die GUID optimierter arbeiten zu können. Durch die zusätzliche Rauminformation 14 kann eine Überprüfung auf Einbauposition und Einbaulage direkt bis zum physikalischen Sensor/Aktor durchgeführt werden. Darüber hinaus ist eine logische Gruppierung/Zuordnung (beispielsweise für redundante und/oder hochverfügbare Komponenten) unabhängig von der vorhandenen Infrastruktur realisierbar.

Zusammenfassend betrifft die Erfindung ein Verfahren zur eindeutigen Identifikation von zumindest einer Komponente eines Automatisierungssystems. Der Erfindung liegt die Aufgabe zugrunde, ein Verfahren zur eindeutigen Identifikation von Automatisierungskomponenten vorzuschlagen, das die Nachteile der bekannten Lösungen vermeidet und die Projektierung vereinfacht. Diese Aufgabe wird durch ein Verfahren zur weltweit eindeutigen Identifikation von zumindest einer Komponente eines Automatisierungssystems gelöst, wobei der Komponente mittels mehrdimensionaler Koordinaten eineindeutig eine Ortsinformation zugeordnet wird, die einen Punkt innerhalb der Komponente bezeichnet und die an das Automatisierungssystem übertragen und/oder für das Automatisierungssystem bereitgestellt wird.

## Patentansprüche

1. Verfahren zur weltweit eindeutigen Identifikation von zumindest einer Komponente (1-9) eines Automatisierungssystems (10), wobei der Komponente (1-9) mittels mehrdimensionaler Koordinaten eineindeutig eine Ortsinformation (12) zugeordnet wird, die einen Punkt innerhalb der Komponente (1-9) bezeichnet und die an das Automatisierungssystem (10) übertragen und/oder für das Automatisierungssystem (10) bereitgestellt wird **dadurch gekennzeichnet, dass**
die Komponente (1-9) ihre Ortsinformation (12) ermittelt und überwacht und eine Abweichung von einem vorgegebenen Wert (16) an das Automatisierungssystem (10) meldet.

2. Verfahren nach Anspruch 1 oder 2,
wobei die Ortsinformation (12) in einem nicht-flüchtigen Speicher (11) abgelegt wird.

3. Verfahren nach Anspruch 1 oder 2,
wobei die Komponente (1-9) bei Vorliegen einer Abweichung ihrer Ortsinformation (12) von einem vorgegebenen Wert (16) in einen Sicherheitszustand übergeht oder vom Automatisierungssystem (10) in einen solchen versetzt wird.

4. Verfahren nach einem der vorhergehenden Ansprüche,
wobei die Ortsinformation (12) um eine erste Zeitinformation (13) ergänzt wird, die angibt, wann sich die Komponente (1-9) an dem zugehörigen Ort befunden hat.

5. Verfahren nach einem der vorhergehenden Ansprüche,
wobei die Komponente (1-9) eine Rauminformation (14) über ihre räumliche Ausrichtung und/oder Ausdehnung bereitstellt.

6. Verfahren nach Anspruch 5,
wobei die Rauminformation (14) in einem nicht-flüchtigen Speicher (11) abgelegt wird.

7. Verfahren nach Anspruch 5 oder 6,
wobei die Komponente (1-9) ihre Rauminformation (14) überwacht und eine Abweichung von einem vorgegebenen Wert (16) an das Automatisierungssystem (10) meldet.

8. Verfahren nach einem der Ansprüche 5 bis 7,
wobei die Komponente (1-9) bei Vorliegen einer Abweichung ihrer Rauminformation (14) von einem vorgegebenen Wert (16) in einen Sicherheitszustand übergeht oder vom Automatisierungssystem (10) in einen solchen versetzt wird.

9. Verfahren nach einem der Ansprüche 5 bis 8,
wobei die Rauminformation (14) um eine zweite Zeitinformation (15) ergänzt wird, die angibt, wann die Komponente (1-9) die zugehörige Ausrichtung und/oder Ausdehnung aufgewiesen hat.

10. Verfahren nach einem der vorhergehenden Ansprüche,
wobei ein Grundwert (17) für die Orts- und/oder Rauminformation (12, 14) in einem nicht-flüchtigen Speicher (11) abgelegt wird.

11. Verfahren nach einem der vorhergehenden Ansprüche,
wobei mehrere Komponenten (1-9) des Automatisierungssystems (10) zu einer Komponente (1-9) gruppiert werden.

12. Verfahren nach einem der vorhergehenden Ansprüche,
wobei alle Komponenten (1-9) des Automatisierungssystems (10) ihre Ortsinformation (12) mittels Koordinaten desselben Koordinatensystems definieren.

13. Verfahren nach einem der vorhergehenden Ansprüche,
wobei bei einer Kommunikation mit der Komponente (1-9) zur Adressierung die eineindeutige Ortsinformation (12) verwendet wird.

14. Komponente (1-9) eines Automatisierungssystems (10) mit Mitteln spieziell angepasst zur Durchführung eines Verfahrens nach einem der Ansprüche 1 bis 13.

15. Automatisierungssystem (10) mit zumindest einer Komponente (1-9) nach Anspruch 14.

## Claims

1. Method for global unique identification of at least one component (1-9) of an automation system (10), with the component (1-9) being assigned in a one-to-one manner by means of multi-dimensional coordinates location information (12) which identifies a point within the component (1-9) and which will be transmitted to the automation system (10) and/or provided for the automation system (10)
**characterised in that**
the component (1-9) determines and monitors its location information (12) and reports a deviation from a predetermined value (16) to the automation system (10).

2. Method according to claim 1 or 2,
with the location information (12) being stored in a non-volatile memory (11).

3. Method according to claim 1 or 2,
with the component (1-9), if there is a deviation of its location information (12) from a predetermined value (16), switching over into a safety state or being put by the automation system (10) into such a state.

4. Method according to one of the previous claims,
with the location information (12) being supplemented by first time information (13) which specifies when the component (1-9) was located at the associated location.

5. Method according to one of the previous claims,
with the component (1-9) providing spatial information (14) about its spatial alignment and/or extent.

6. Method according to claim 5,
with the spatial information (14) being stored in a non-volatile memory (11).

7. Method according to claim 5 or 6,
with the component (1-9) monitoring its spatial information (14) and reporting a deviation from an actual value (16) to the automation system (10).

8. Method according to one of claims 5 to 7,
with the component (1-9), if there is a deviation of its location information (12) from a predetermined value (16) switching over into a safety state or being put by the automation system (10) into such a state.

9. Method according to one of claims 5 to 8,
with the spatial information (14) being supplemented by second time information (15) which specifies when the component (1-9) has exhibited the associated alignment and/or extent.

10. Method according to one of the previous claims,
with a basic value (17) for the location and/or spatial information (12, 14) being stored in a non-volatile memory (11).

11. Method according to one of the previous claims,
with a number of components (1-9) of the automation system (10) being grouped into one component (1-9).

12. Method according to one of the previous claims,
with all components (1-9) of the automation system (10) defining their location information (12) by means of coordinates of the same coordinate system.

13. Method according to one of the previous claims,
with, for communication with the component (1-9), the one-to-one location information (12) being used for communication.

14. Components (1-9) of an automation system (10) - with means for executing a method according to one of claims 1 to 13.

15. Automation system (10) with at least one component (1-9) according to claim 14.

## Revendications

1. Procédé pour identifier de manière univoque dans le monde entier au moins un composant (1-9) d'un système d'automatisation (10), au composant (1-9) étant associée de manière bi-univoque, au moyen de coordonnées multidimensionnelles, une information de localisation (12) qui désigne un point à l'intérieur du composant (1-9) et qui est transmise au système d'automatisation (10) et/ou est mise à la disposition du système d'automatisation (10), **caractérisé en ce que** le composant (1-9) détermine et surveille son information de localisation (12) et communique au système d'automatisation (10) tout écart par rapport à une valeur prédéterminée (16).

2. Procédé selon la revendication 1 ou 2, l'information de localisation (12) étant déposée dans une mémoire non volatile (11).

3. Procédé selon la revendication 1 ou 2, le composant (1-9), en présence d'un écart de son information de localisation (12) par rapport à une valeur prédéterminée (16), se mettant dans un état de sécurité ou étant mis dans un tel état par le système d'automatisation (10).

4. Procédé selon l'une des revendications précédentes, l'information de localisation (12) étant complétée par une première information temporelle (13) qui indique quand le composant (1-9) s'est trouvé à l'endroit associé.

5. Procédé selon l'une des revendications précédentes, le composant (1-9) mettant à disposition une information spatiale (14) relative à son orientation et/ou son étendue dans l'espace.

6. Procédé selon la revendication 5, l'information spatiale (14) étant déposée dans une mémoire non volatile (11).

7. Procédé selon la revendication 5 ou 6, le composant (1-9) surveillant son information spatiale (14) et signalant au système d'automatisation (10) tout écart par rapport à une valeur prédéterminée (16).

8. Procédé selon l'une des revendications 5 à 7, le composant (1-9), en présence d'un écart de son information spatiale (14) par rapport à une valeur prédéterminée (16), se mettant dans un état de sécurité ou étant mis dans un tel état par le système d'automatisation (10).

9. Procédé selon l'une des revendications 5 à 8, l'information spatiale (14) étant complétée par une deuxième information temporelle (15) qui indique quand le composant (1-9) a présenté l'orientation et/ou l'étendue associées.

10. Procédé selon l'une des revendications précédentes, une valeur de base (17) pour l'information de localisation et/ou l'information spatiale (12, 14) étant déposée dans une mémoire non volatile (11).

11. Procédé selon l'une des revendications précédentes, plusieurs composants (1-9) du système d'automatisation (10) étant groupés pour constituer un composant (1-9).

12. Procédé selon l'une des revendications précédentes, tous les composants (1-9) du système d'automatisation (10) définissent leur information de localisation (12) au moyen de coordonnées du même système de coordonnées.

13. Procédé selon l'une des revendications précédentes, l'information de localisation bi-univoque (12) étant utilisée pour l'adressage dans le cas d'une communication avec le composant (1-9).

14. Composant (1-9) d'un système d'automatisation (10), avec des moyens spécialement adaptés pour exécuter un procédé selon l'une des revendications 1 à 13.

15. Système d'automatisation (10) avec au moins un composant (1-9) selon la revendication 14.
